# EUROPÄISCHE PATENTSCHRIFT

(11) **EP 3 083 445 B1**
(45) Veröffentlichungstag und Bekanntmachung des Hinweises auf die Patenterteilung: **12.07.2017**
(21) Anmeldenummer: 14824443.7
(22) Anmeldetag: 17.12.2014
(51) Int. Cl.: B65D 81/38

(54) **BEHÄLTER MIT EINER MISCHUNG AUS PHASENWECHSELMATERIAL UND GRAPHITPULVER**
CONTAINER HAVING A MIXTURE OF PHASE-CHANGE MATERIAL AND GRAPHITE POWDER
RÉCIPIENT COMPRENANT UN MÉLANGE COMPOSÉ D'UN MATÉRIAU À CHANGEMENT DE PHASE ET D'UNE POUDRE DE GRAVITE

(30) Priorität: 19.12.2013 DE 102013114507
(43) Veröffentlichungstag der Anmeldung: 26.10.2016
(73) Patentinhaber: Fraunhofer-Gesellschaft zur Förderung der angewandten Forschung e.V., 80686 München (DE)
(72) Erfinder: SEDLBAUER, Klaus, 83700 Rottach-Egern (DE); SINNESBICHLER, Herbert, 83064 Raubling (DE)
(86) Internationale Anmeldenummer: PCT/EP2014/078293
(87) Internationale Veröffentlichungsnummer: WO 2015/091687

(56) Entgegenhaltungen:
- EP-A1- 1 598 406
- WO-A1-2008/107657
- DE-B3-102005 030 310
- US-A1- 2013 221 013
- US-B1- 6 266 972

## Beschreibung

Die Anmeldung betrifft einen Behälter mit einer Mischung aus Phasenwechselmaterial und Graphitpulver.

### Stand der Technik

Aus der DE 10 2005 030 310 B3 ist bekannt, in Trinkbehältern zwischen der Innenwand und der Außenwand Phasenwechselmaterial anzubringen. Damit soll erreicht werden, dass ein eingefülltes Heißgetränk mit einer Temperatur oberhalb einer gewünschten Trinktemperatur Wärme an das Phasenwechselmaterial abgibt, indem das Phasenwechselmaterial geschmolzen wird. Damit wird eine gewünschte Trinktemperatur erreicht. Eine weitere Abkühlung durch Wärmeabgabe an die Umgebung wird dadurch vermindert, dass bei der Erstarrung des Phasenwechselmaterials wieder Wärme an das Heißgetränk abgegeben wird. Um die Wärme effizient in das Phasenwechselmaterial einzuführen und wieder abzuführen, ist eine Wärmeleitstruktur im Bereich zwischen Innenwand und Außenwand vorgesehen. Derartige Trinkbehälter haben positive Eigenschaften um über längere Zeit Heißgetränke im Bereich einer gewünschten Trinktemperatur zu halten.

Für die Ausrüstung von Gebäudewände sind Decken- und Wandelemente bekannt, die eine Mischung aus Phasenwechselmaterial und Graphit enthalten. Das Phasenwechselmaterial dient dabei als Wärmespeicher. Die aufgenommene Wärme kann dazu verwendet werden das feste Phasenwechselmaterial, etwa Wachs, zu schmelzen. Dies erfolgt bei der Phasenwechseltemperatur. Damit kann in einem geringen Temperaturintervall, nämlich in einem Temperaturintervall um die Phasenwechseltemperatur, eine große Menge Wärme gespeichert werden. Bei der Erstarrung kann die Wärme wieder entnommen werden. Diese positiven Eigenschaften können häufig nicht optimal genutzt werden, da die Wärmeleitung der Phasenwechselmaterialien oft niedrig ist. Daher werden Mischungen eingesetzt, welche neben dem Phasenwechselmaterial auch Graphit enthalten. Damit kann die Wärmeleitung deutlich verbessert werden, siehe hierzu auch die Prospekte "ECOPHIT Der Naturgraphit-Baustoff für die Gebäudeklimatisierung", "ECOPHIT G Hoch leitfähiges expandiertes Graphitpulver" und "ECOPHIT S Flexibel einsetzbare PCM/Graphit-Mischung". Aus solchen Mischungen gefertigte Deckenelemente können etwa dazu dienen die Überhitzung eines Raums zu verhindern. Überschüssige Wärme bewirkt ein Schmelzen des Phasenwechselmaterials. Bei einer Abkühlung des Raums und der damit einhergehenden Erstarrung des Phasenwechselmaterials wird Wärme frei und tritt der Abkühlung entgegen. Durch das Graphitpulver kann die Wärme gut geleitet werden.

In der DE 10 2005 051 570 A1 ist beschrieben zur Temperaturstabilisierung in Containern aktive Einrichtungen wie Heizungen und Kühlaggregate unterstützt von passiven Schutzmaßnahmen einzusetzen. Zur Vermeidung von Wartungs- und Betriebskosten werden Container doppelwandig ausgeführt und der Raum zwischen den Wandungen mit einem Phasenwechselmaterial, vorzugsweise Paraffin oder Paraffingemisch, gefüllt. Die Phasenwechseltemperatur ist auf einen Wert im zulässigen Temperaturbereich des Containerinnenraumes eingestellt.

Aus der DE 10 2006 059 533 A1 ist ein thermoreguliertes Wärmespeicherelement bekannt. Dieses besteht unter anderem aus einem Wärmespeicher unter Verwendung verschiedener Wärmespeichermaterialien, vorzugsweise Phasenwechselmaterial, der an einem Thermoregulierungselement angeordnet ist und eine Temperaturstabilität an seiner Oberfläche über eine längere Nutzungszeit ohne Zuführung einer Fremdenergie gewährleistet.

Aus der US 4,357,809 A ist eine Getränkekühlungsanordnung mit einer inneren Aufnahme bekannt. Die innere Aufnahme hat ein geschlossenes Ende und ein offenes Ende. Die Enden sind durch eine Wand verbunden. Eine äußere Umhüllung ist vorhanden um ein Kühlmittel anzuordnen.

Aus der US 7,484,383 B1 ist ein Krug bekannt, der Getränke längere Zeit kühl halten soll. Der Krug hat eine Auskleidung und eine Wand, zwischen denen ein Hohlraum ausgebildet ist. Darin ist eine gefrierbare Substanz angeordnet.

Aus der US 2013/0221013 A1 ist ein Behälter bekannt, mit einer inneren Behälterwand und einer äußeren Behälterwand und einem zwischen den Behälterwänden liegenden Zwischenraum. Im Zwischenraum ist Phasenwechselmaterial angeordnet. Ferner offenbart die US 2013/0221013 A1 im Zwischenraum Wärmeleitstrukturen aus Metall anzuordnen. In Absatz [0080] der US 2013/0221013 A1 ist erwähnt, dass Fig. 11 auch dahingehend interpretiert werden kann, dass eine Vielzahl von Partikeln aus Graphit, die in einem Phasenwechselmaterial dispergiert sind, vorhanden ist,

Aus der US 6,266 972 B1 ist eine Anordnung von Gefrierpalletten zur Lagerung verderblicher Waren gezeigt. Vorhandene Seitenwände können Phasenwechselmaterial enthalten. Damit wird eine Stabilisierung der Temperatur erreicht.

Aus der WO 2008/107657 A1 ist ein Trinkbehälter bekannt, dessen Seitenwände Phasenwechselmaterial enthalten.

### Aufgabe der Erfindung

Aufgabe der Erfindung ist es einen alternativen Trinkbehälter bereitzustellen, der leicht herstellbar ist und ein entsprechendes Herstellungsverfahren anzugeben. Die Lösung der Aufgabe findet sich insbesondere in den unabhängigen Ansprüchen. Die abhängigen Ansprüche geben vorteilhafte Weiterentwicklungen an. Die Beschreibung lehrt weitere Einzelheiten.

### Allgemeine Lösung

Erfindungsgemäß ist ein Behälter, insbesondere ein Trinkgefäß, mit einer inneren Behälterwand und einer äußeren Behälterwand und einem zwischen den Behälterwänden liegenden Zwischenraum vorgesehen. Der Zwischenraum ist mit einer Mischung gefüllt, welche Phasenwechselmaterial und Graphitpulver enthält, wobei das Graphitpulver so in das Phasenwechselmaterial eingebracht ist, dass die Mischung bei einer Temperatur, bei der das Phasenwechselmaterial flüssig ist, eine breiartige Konsistenz aufweist.

Damit werden mehrere Vorteile erreicht. Zunächst kann durch die Mischung aus Graphitpulver und Phasenwechselmaterial erreicht werden, dass hinreichende Wärmeleitung in das Phasenwechselmaterial hinein möglich ist. Dieser Effekt ist von den eingangs geschilderten Decken- und Wandelementen her bekannt. Dieser Effekt wird freilich auch mit der aus dem Stand der Technik bekannten Wärmeleitstruktur erreicht.

Ein wesentlicher zusätzlicher Aspekt ist, dass durch eine Mischung, die bei einer Temperatur, bei der das Phasenwechselmaterial flüssig ist, eine breiartige Konsistenz aufweist, erreicht wird, dass ein Austritt des Phasenwechselmaterials verhindert wird. Wenngleich aus dem abgeschlossenen Raum zwischen Innenwand und Außenwand im Normalfall ohnehin kein Phasenwechselmaterial austritt, wird durch eine derartige Mischung dies weiter verhindert. Auch wenn das eingesetzte Phasenwechselmaterial im Regelfall gesundheitlich so unbedenklich ist, dass ein Austreten -etwa bei Beschädigung des Behälters - unproblematisch wäre, so ist allein aus Gründen der Lebensmittelsicherheit ein entsprechender Schutz oft wünschenswert. Vor allem aber würde ein Austreten von heißem und flüssigem Phasenwechselmaterial zu Verschmutzungen führen. Auch sind gewisse Verbrennungsgefahren für die Haut gegeben. Dabei wird nicht verkannt, dass das Heißgetränk selbst eine höhere Temperatur haben kann. Es ist jedoch ersichtlich, dass etwa heißer Tee auf der Haut weniger problematisch ist als heißes Wachs, da letzteres wegen seiner höheren Zähigkeit länger auf der Haut verbleibt. Die bei der Abkühlung und Erstarrung des Wachses freiwerdende Wärme - der sonst meist erwünschte Effekt - wäre auf der Haut zusätzlich unerwünscht.

Die Mischung kann zusätzlich in einer Folie verpackt werden um die Gefahr des Austretens von Phasenwechselmaterial zu reduzieren. Aus der bisherigen Erfahrung scheint dies aber nicht erforderlich zu sein.

Die Mischung aus Graphitpulver und Phasenwechselmaterial lässt sich auch gut einer gewünschten Form anpassen. Damit kann die spezifische Form zwischen Innenwand und Außenwand des Trinkbehälters leicht erreicht werden. Bei einer Temperatur, bei der Phasenwechselmaterial flüssig ist, also bei einer breiartigen Konsistenz der Mischung ist dies ersichtlich der Fall. Aber auch bei einer niedrigeren Temperatur ist dies zumeist gut möglich. Man muss sich nur klar machen, dass etwa Wachs mit entsprechendem Druck auch geformt werden kann, wenn es weitgehend fest ist. Es ist also mit vertretbarem Aufwand eine Anpassung an die spezifische Form des Trinkbehälters möglich. Damit ist eine wirtschaftliche Herstellung auch bei überschaubaren Stückzahlen möglich.

Ein weiterer Aspekt ist, dass sich das flüssige Phasenwechselmaterial durch die Einbindung in die Mischung mit breiartiger Konsistenz nicht etwa im Bodenbereich des Behälters, also zwischen dem Boden der Innenwand und der Außenwand sammeln kann. Diese Gefahr besteht bei den im Stand der Technik bekannten Behältern. Nach dem Einfüllen eines Heißgetränks mit einer Temperatur deutlich oberhalb der Phasenwechseltemperatur wird das Phasenwechselmaterial flüssig. Durch die Schwerkraft kann es sich im Bodenbereich sammeln und an anderen Stellen fehlen. Dies wird durch die nachfolgende Erstarrung auch nicht wieder ausgeglichen.

In einer Ausführungsform beträgt das Verhältnis zwischen einem Behälternutzvolumen, also dem für das Heißgetränk zur Verfügung stehenden Volumen und dem Volumen der Mischung von 10:1 bis 10:10, bevorzugt von 10:5 bis 10:7. Je größer das Verhältnis umso kleiner und leichter kann der Behälter für ein gewünschtes Behälternutzvolumen sein. Eine größere Menge an Mischung ist für die zügige Abkühlung auf Trinktemperatur und langes Halten der Trinktemperatur vorteilhaft. Es ist also ein Kompromiss zu wählen. Die genannten Bereiche sind möglich. Ein Verhältnis von 10:6 hat sich als praxistauglich bewährt.

In einer Ausführungsform werden als Phasenwechselmaterial natürliche Wachse, Montanwachse, Fettsäuren, insbesondere Stearinsäure, Fettsäureesther, Zuckeralkohole, Salzhydrate Paraffin, und/oder Stearinsäure und/oder Wachse, gewählt. Die Auswahl erfolgt dabei vor allem nach dem gewünschten Anwendungszweck. So hat Stearinsäure eine Phasenwechseltemperatur von gut 60°C und liegt damit im Bereich einer gewünschten Trinktemperatur von Heißgetränken. Salzhydrate hingegen haben meist eine niedrigere Umschlagtemperatur.

Der Schmelzbereich von Stearinsäure liegt je nach Zusammensetzung zwischen 60°C und 70°C. Im Gegensatz zu Paraffin, das ein Nebenprodukt der Erdölverarbeitung ist, wird Stearinsäure hauptsächlich aus pflanzlichem Palmöl oder aus tierischem Fett gewonnen. Palmöl ist biologisch abbaubar und kann umweltschonend entsorgt werden, z. B. über den Biomüll.

In einer Ausführungsform der Erfindung liegt die Phasenwechseltemperatur des Phasenwechselmaterials im Bereich einer gewünschten Verzehrtemperatur. Wie oben bereits erwähnt liegt eine gewünschte Trinktemperatur von Heißgetränken bei gut 60°C. Babynahrung sollte bei einer Temperatur von gut 30°C verzehrt werden.

Eine geeignete Verzehrtemperatur für Babynahrung zu erreichen zeigt großes Potential. Bei der Bereitung eines Breis für Babys wird aus hygienischen Gründen die Verwendung von kochendem Wasser empfohlen. Der so bereitete Brei ist sodann auf eine Verzehrtemperatur abzukühlen und sollte anschließend nicht weiter abkühlen. Durch Einsatz eines Behälters mit Phasenwechselmaterial im entsprechenden Temperaturbereich kann die Abkühlung beschleunigt werden. Angesichts der Ungeduld von Babys beim Abwarten einer geeigneten Verzehrtemperatur ist der Vorteil evident. Die längere Aufrechterhaltung einer geeigneten Verzehrtemperatur ist zudem bedeutsam.

Wenngleich die aus derzeitiger Sicht wichtigeren Anwendungen darin liegen, bei warmen Getränken oder Speisen für eine angenehme Verzehrtemperatur zu sorgen, so ist es prinzipiell auch möglich etwa kalte Getränke rasch auf eine angenehme Verzehrtemperatur anzuwärmen und eine weitere Erwärmung durch das Phasenwechselmaterial zu verhindern. In diesem Fall wäre freilich eine viel niedrigere Phasenwechseltemperatur zu wählen.

In einer Ausführungsform der Erfindung ist im Zwischenraum eine Struktur vorhanden, welche zur mechanischen Stabilität beiträgt, wobei die Struktur Bestandteil der inneren und/oder äußeren Behälterwand sein kann. Eine derartige Struktur kann wie im eingangs geschilderten Stand der Technik auch dazu dienen die Wärmeleitung zu verbessern und ein Fließen des flüssigen Phasenwechselmaterials zu verhindern. Im Regelfall sind die letztgenannten Effekte angesichts der guten Wärmeleitfähigkeit der Mischung - es werden Werte bis zu 5 W/mK erreicht - und der breiartigen Konsistenz der Mischung nicht erforderlich.

In einer Ausführungsform weist die innere Behälterwand eine Wärmeleitfähigkeit von mindestens 10 W/mK, besonders bevorzugt mindestens 20 Wm/K auf und/oder die äußere Behälterwand einen Wärmedurchlasswiderstand von mindestens 0,01 m²K/W, bevorzugt mindestens 0,1 m²K/W. Die Werte für die innere Behälterwand werden durch den Einsatz von Metall, etwa Stahl, erreicht. Es können auch weit höhere Werte erreicht werden. Ein Wärmedurchlasswiderstand 0,01 m²K/W kann durch einen normalen Kunststoff mit einer Wärmeleitfähigkeit von 0,2 W/mK und einer Dicke von 2 mm bereits erreicht werden. Ein Wärmedurchlasswiderstand von 0,1 m²K/W lässt sich mit einem Dämmstoff mit einer Dicke von 4mm und einer Wärmeleitfähigkeit von 0,04 W/mK erzielen. Wie aus dem Stand der Technik bekannt dient ein hoher Wärmeleitwert der inneren Behälterwand dazu, Wärme gut vom Getränk oder der Speise zum Phasenwechselmaterial zu führen. Ein hoher Wärmedurchlasswiderstand an der äußeren Behälterwand trägt dazu bei, dass möglichst wenig Wärme an die Umgebung abgeführt wird.

Wie weiter oben bereits angesprochen betrifft die Erfindung auch ein Verfahren zur Herstellung eines Behälters, insbesondere eines oben geschilderten Behälters. Das Herstellungsverfahren umfasst folgende Schritte, deren Reihenfolge zunächst nicht vorgegeben ist.
A) Bereitstellen einer inneren Behälterwand und einer äußeren Behälterwand;
B) Anbringen einer Mischung aus Graphitpulver und Phasenwechselmaterial auf der Innenseite der äußeren Behälterwand und/oder der Außenseite der inneren Behälterwand;
C) Zusammenfügen der äußeren Behälterwand und der inneren Behälterwand.

Schritt A kann wie im Stand der Technik hinlänglich bekannt durchgeführt werden.

Zu Schritt B ist auszuführen dass es hierzu mehrere Möglichkeiten gibt. Ein Ansatz ist die Mischung so weit zu erwärmen, dass sich die breiartige Konsistenz ergibt. Dann kann die Mischung etwa auf die Innenseite der äußeren Behälterwand gegeben werden. Anschließend kann die innere Behälterwand eingesetzt werden.

Alternativ kann die innere Behälterwand zunächst in die äußere Behälterwand eingeführt werden. Anschließend kann Mischung etwa mit einem Injektionsgerät in den Zwischenraum eingeführt werden. Dabei kann die Mischung etwa im oberen Bereich zwischen den Behälterwänden eingeführt werden. Denkbar wäre auch in einer der Behälterwände eine verschließbare Einfüllöffnung vorzusehen.

Schließlich sind die innere und äußere Behälterwand gemäß Schritt C zusammenzufügen. Dabei ist einerseits eine gewisse mechanische Stabilität sicherzustellen. Vor allem aber ist auch ein Verschluss zu gewährleisten, so dass keine Mischung aus dem Zwischenraum austreten kann.

In besonderer Weise hat sich bisher bewährt die Mischung in eine Form zu pressen, die dem Zwischenraum zwischen innerer Behälterwand und äußerer Behälterwand entspricht. Dabei ist es nicht erforderlich, dass die Mischung eine Temperatur hat, bei der das Phasenwechselmaterial flüssig vorliegt. Wie bereits weiter oben erwähnt lässt sich auch die Mischung mit festem Phasenwechselmaterial durch hinreichenden Druck gut zu einer gewünschten Form pressen. Der Nachteil dass hier höherer Druck erforderlich ist wird dadurch wettgemacht, dass die Mischung in diesem Zustand sich leichter wieder von einem Presswerkzeug ablöst. Es ist zu erwähnen, dass das entsprechende Presswerkzeug vergleichsweise einfach aufgebaut sein kann. Es ist daher wirtschaftlich auch überschaubare Stückzahlen herzustellen.

Als innere Behälterwand und äußere Behälterwand können auch Teile zum Einsatz kommen, die bei Behältern vorhanden sind, die nicht erfindungsgemäß ausgeführt sind. Damit kann von den Vorteilen großer Stückzahlen auch für Behälter profitiert werden, welche nur in überschaubaren Stückzahlen gefertigt werden. Dabei ist zu betonen, dass diese Betrachtung relativ ist. Gemessen an der großen Zahl von Behältern dürfte die Zahl der erfindungsgemäßen Behälter niedrig bleiben. Absolut gesehen handelt es sich aber um eine wesentliche Innovation, die breite Anwendung finden dürfte.

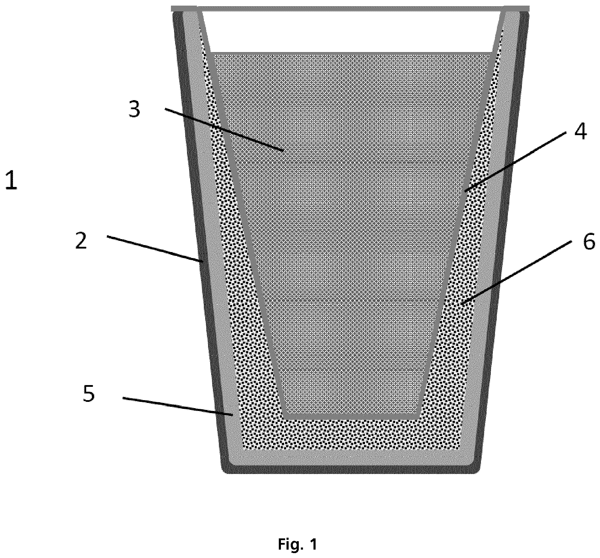

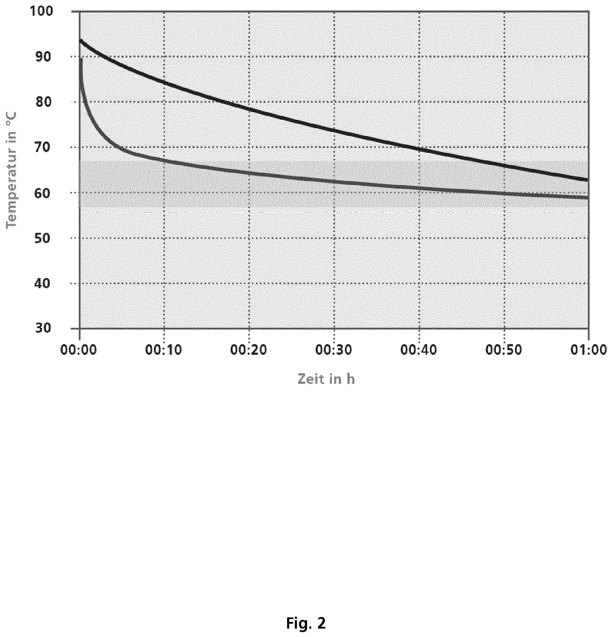

Anhand eines Ausführungsbeispiels soll die Erfindung näher beschrieben werden. Fig. 1 zeigt schematischen ein erfindungsgemäßes Trinkgefäß. Fig. 2 den Temperaturverlauf eines eingefüllten Heißgetränks mit und ohne Phasenwechselmaterial enthaltende Mischung.

Gezeigt ist ein Trinkgefäß 1, welches nach Art eines "coffee-to go" Becher ausgebildet ist. Dabei ist eine äußere Behälterwand 2, welche aus Kunststoff gebildet ist zu erkennen. In ein Behälternutzvolumen 3 kann ein Heißgetränk eingefüllt werden. Das Behälternutzvolumen 3 ist von einer inneren Behälterwand 4 umgeben. Die innere Behälterwand 4 ist durch einen thermisch gut leitenden Metalleinsatz gebildet, der aus Aluminium oder Stahl gefertigt ist. Zwischen der inneren Behälterwand 4 und der äußeren Behälterwand 2 ist ein Zwischenraum 5 ausgebildet. Dieser ist mit einer Mischung 6 gefüllt, welche Phasenwechselmaterial und Graphitpulver enthält. Wenngleich nach Fig. 1 aus Darstellungsgründen nur ein Teil des Zwischenraums 5 mit der Mischung 6 gefüllt ist, ist es grundsätzlich sinnvoll möglichst den ganzen Zwischenraum 5 mit der Mischung 6 zu füllen. Freilich ist zu beachten dass die Mischung 6 bei erstarrtem Zustand des Phasenwechselmaterials ein etwas niedrigeres Volumen aufweist als bei flüssigem Zustand des Phasenwechselmaterials. Damit ist klar, dass bei erstarrtem Zustand des Phasenwechselmaterials die Mischung 6 nicht den gesamten Zwischenraum 5 ausfüllen kann.

Um Wärmeverluste zu vermeiden, ist auf der dem Zwischenraum 5 zugewandten Seite der äußeren Behälterwand 2 eine nicht dargestellte Dämmstofflage angebracht. Ferner ist ein ebenfalls nicht dargestellter Deckel zur Bedeckung des Behälternutzvolumens 3 vorhanden.

Als Phasenwechselmaterial in der Mischung 6 dient Stearinsäure. Als Graphitpulver kommen Graphit-Slurries zum Einsatz, welche von SGL-Carbon bezogen worden sind. Die verwendete Stearinsäure hat einen Schmelzpunkt, das heißt also eine Phasenwechseltemperatur, von etwa 69°C. Durch die gewählt Mischung 6 wird erreicht, dass auch bei Temperaturen über 69°C, also bei geschmolzener Stearinsäure, die Mischung 6 breiartig ist.

Zur Herstellung des Bechers 1 wird die Mischung 6 bei erstarrtem Phasenwechselmaterial mit einem Presswerkzeug in eine passende Form gepresst. Die passende Form wird in die äußere Behälterwand 2 eingesetzt. Die innere Behälterwand 4 wird in die passende Form eingesetzt. Im oberen Bereich werden innere Behälterwand 4 und äußere Behälterwand 6 verschweißt.

Fig. 2 zeigt Temperaturverläufe eines in einen Becher eingefüllten Heißgetränks. Auf der Hochwertachse ist die Temperatur in °C angegeben. Auf der Rechtswertachse die Zeit in Stunden und Minuten. Dargestellt ist der Temperaturverlauf eines Heißgetränks über 1 Stunde und 30 Minuten, wobei das Heißgetränk bei gut 90°C eingefüllt wird. Die obere Kurve zeigt den Temperaturverlauf in einen konventionellen "coffee to go" Becher. Die untere Kurve den Temperaturverlauf in einen oben geschilderten Becher 1 mit einer Phasenwechselmaterial enthaltenden Mischung. Der Inhalt des eingefüllten Heißgetränks beträgt in beiden Fällen 200 ml. Beim Becher mit der Phasenwechselmaterial enthaltenden Mischung 6 beträgt das Volumen der Mischung 6 etwa 120 ml. Bei beiden Bechern ist ein Deckel vorhanden, welcher die Abkühlung massiv verlangsamt. Zumindest bei der Ausführungsform mit Deckel ist der mit Phasenwechselmaterial erreichbare Vorteil wie ersichtlich nicht die dauerhaft verlangsamte Abkühlung, wie vielleicht vermutet werden könnte. Entscheidend ist eine rasche Abkühlung auf eine angenehme Trinktemperatur und dann eine nur noch langsame Abkühlung. Es wird also die Zeitspanne, bei der eine angenehme Trinktemperatur besteht, deutlich verlängert.

### Bezugszeichenliste

- 1: Becher
- 2: äußere Behälterwand
- 3: Behälternutzvolumen
- 4: innere Behälterwand
- 5: Zwischenraum
- 6: Mischung aus Phasenwechselmaterial und Graphitpulver

## Patentansprüche

1. Behälter (1), insbesondere Trinkgefäß, mit einer inneren Behälterwand (4) und einer äußeren Behälterwand (2) und einem zwischen den Behälterwänden (2, 4) liegenden Zwischenraum (5), wobei der Zwischenraum (5) mit einer Mischung (6) gefüllt ist, welche Phasenwechselmaterial und Graphitpulver enthält, **dadurch gekennzeichnet, dass** das Graphitpulver so in das Phasenwechselmaterial eingebracht ist, dass die Mischung (6) bei einer Temperatur, bei der das Phasenwechselmaterial flüssig ist, eine breiartige Konsistenz aufweist, derart, dass ein Austritt des Phasenwechselmaterials verhindert ist und dass sich das flüssige Phasenwechselmaterial nicht durch Schwerkraft im Bodenbereich, also zwischen dem Boden der Innenwand und der Außenwand des Behälters sammeln kann.

2. Behälter nach Anspruch 1, **dadurch gekennzeichnet, dass** das Verhältnis zwischen einem Behälternutzvolumen (3) und dem Volumen der Mischung (6) von 10:1 bis 10:10, bevorzugt von 10:5 bis 10:7, beträgt.

3. Behälter (1) nach einem der vorhergehenden Ansprüche, **dadurch gekennzeichnet, dass** als Phasenwechselmaterial natürliche Wachse, Montanwachse, Fettsäuren, insbesondere Stearinsäure, Fettsäureesther, Zuckeralkohole, Salzhydrate Paraffin, und/oder Stearinsäure und/oder Wachse, gewählt ist.

4. Behälter (1) nach einem der vorhergehenden Ansprüche, **dadurch gekennzeichnet, dass** die Phasenwechseltemperatur des Phasenwechselmaterials im Bereich einer gewünschten Verzehrtemperatur liegt.

5. Behälter (1) nach einem der vorhergehenden Ansprüche, **dadurch gekennzeichnet, dass** im Zwischenraum (5) eine Struktur vorhanden ist, welche zur mechanischen Stabilität beiträgt, wobei die Struktur Bestandteil der der inneren (4) und/oder äußeren Behälterwand (2) sein kann.

6. Behälter (1) nach einem der vorhergehenden Ansprüche, **dadurch gekennzeichnet, dass** die innere Behälterwand (4) eine Wärmeleitfähigkeit von mindestens 10 W/mK, besonders bevorzugt mindestens 20 Wm/K aufweist und/oder die äußere Behälterwand (2) einen Wärmedurchlasswiderstand von mindestens 0,01 m²K/W, bevorzugt mindestens 0,1 m²K/W aufweist.

7. Verfahren zur Herstellung eines Behälters (1) nach einem der vorhergehenden Ansprüche mit folgenden Schritten:
A) Bereitstellen einer inneren Behälterwand (4) und einer äußeren Behälterwand (2);
B) Anbringen einer Mischung (6) aus Graphitpulver und Phasenwechselmaterial auf der Innenseite der äußeren Behälterwand (2) und/oder der Außenseite der inneren Behälterwand (4);
C) Zusammenfügen der äußeren Behälterwand (2) und der inneren Behälterwand (4).

8. Verfahren nach Anspruch 7, **dadurch gekennzeichnet, dass** zuerst Schritt A), dann Schritt B) und dann Schritt C) durchgeführt wird.

9. Verfahren nach Anspruch 7, **dadurch gekennzeichnet, dass** nach Schritt A), zunächst Schritt C) durchgeführt wird, und dass zur Durchführung von Schritt B) in einen Zwischenraum (5) zwischen der inneren (4) und äußeren Behälterwand (2), der sich bei der Durchführung von Schritt C) ergeben hat, die Mischung (6) eingeführt wird.

## Claims

1. Container (1), in particular a beverage container, comprising an inner container wall (4) and an outer container wall (2) and an intermediate space (5) lying between the container walls (2, 4), wherein the intermediate space (5) is filled with a mixture (6) which contains phase-change material and graphite powder, **characterized in that** the graphite powder is introduced into the phase-change material in such a way that the mixture (6) has a sludgy consistency at a temperature at which the phase-change material is liquid, such that leakage of the phase-change material is prevented and that the liquid phase change material does not collect due to the force of gravity in the bottom region of the container.

2. Container according to claim 1, **characterized in that** the ratio of a useful container volume (3) to mixture volume (6) amounts to 10:1 to 10:10, preferably 10:5 to 10:7.

3. Container (1) according to any one of the preceding claims, **characterized in that** the phase-change material may be natural waxes, Montan waxes, fatty acids, in particular stearic acid, fatty acid esters, sugar alcohols, salt hydrates, paraffin, and/or stearic acid and/or waxes.

4. Container (1) according to any one of the preceding claims, **characterized in that** the phase-change temperature of the phase-change material lies in the range of the desired consumption temperature.

5. Container (1) according to any one of the preceding claims, **characterized in that** a structure is present in the intermediate space (5) which contributes to mechanical stability, wherein the structure can be a constituent of the inner (4) and/or the outer container wall (2).

6. Container (1) according to any one of the preceding claims, **characterized in that** the inner container wall (4) has a thermal conductivity of at least 10 W/mK, especially preferably at least 20 W/mK and/or the outer container wall (2) has a thermal resistance of at least 0.01 m²K/W, preferably at least 0.1 m²K/W.

7. Method for producing a container (1) according to any one of the preceding claims, comprising the following steps:
A) providing an inner container wall (4) and an outer container wall (2);
B) applying a mixture (6) of graphite powder and phase-change material to the inside of the outer container wall (2) and/or the outside of the inner container wall (4);
C) joining the outer container wall (2) and the inner container wall (4).

8. Method according to claim 7, **characterized in that** first step A) is carried out, then step B), and then step C).

9. Method according to claim 7, **characterized in that** after step A), first step C) is carried out, and that to implement step B), the mixture (6) is added to the intermediate space (5) between the inner (4) and outer container wall (2), which intermediate space (5) was created upon implementation of step C).

## Revendications

1. Récipient (1), en particulier récipient à boisson,
présentant une paroi intérieure (4) et une paroi extérieure (2) ainsi qu'un espace intermédiaire (5) situé entre les deux parois (2, 4) du récipient,
l'espace intermédiaire (5) étant rempli d'un mélange qui contient un matériau à changement de phase et de la poudre de graphite,
**caractérisé en ce que**
la poudre de graphite est apportée dans le matériau à changement de phase de telle sorte qu'à une température à laquelle le matériau de changement de phase est liquide, le mélange (6) présente la consistance d'un goudron de sorte que le matériau à changement de phase ne puisse sortir et que le matériau liquide à changement de phase ne puisse se rassembler par gravité au niveau du fond et donc entre le fond de la paroi intérieure et de la paroi extérieur du récipient.

2. Récipient selon la revendication 1, **caractérisé en ce que** le rapport entre le volume utile (3) du récipient et le volume de mélange (6) est compris entre 10:1 et 10:10 et de préférence entre 10:5 et 10:7.

3. Récipient (1) selon l'une des revendications précédentes, **caractérisé en ce que** comme matériau à changement de phase, on sélectionne de la cire naturelle, de la cire de lignite, des acides gras, en particulier de l'acide stéarique, des esters d'acide gras, des alcools de sucre, des sels hydratés, de la paraffine et/ou de l'acide stéarique et/ou de la cire.

4. Récipient (1) selon l'une des revendications précédentes, **caractérisé en ce que** la température de changement de phase du matériau de changement de phase est située au niveau de la température souhaitée pour la consommation.

5. Récipient (1) selon l'une des revendications précédentes, **caractérisé en ce qu'**une structure qui contribue à la stabilité mécanique est prévue dans l'espace intermédiaire (5), la structure pouvant faire partie de la paroi intérieure (4) et/ou de la paroi extérieure (2) du récipient.

6. Récipient (1) selon l'une des revendications précédentes, **caractérisé en ce que** la paroi intérieure (4) du récipient présente une conductivité thermique d'au moins 10 W/m.K, de façon particulièrement préférable d'au moins 20 W/m.K et/ou **en ce que** la paroi extérieure (2) du récipient présente une résistance thermique d'au moins 0,01 m².K/W et de préférence d'au moins 0,1 m².K/W.

7. Procédé de fabrication d'un récipient (1) selon l'une des revendications précédentes, le procédé présentant les étapes suivantes :
A) préparer une paroi intérieure (4) et une paroi extérieure (2) du récipient,
B) placer un mélange (6) de poudre de graphite et d'un matériau à changement de phase sur le côté intérieur de la paroi extérieure (2) du récipient et/ou sur le côté extérieur de la paroi intérieure (4) du récipient,
C) assembler la paroi extérieure (2) et la paroi intérieure (4) du récipient.

8. Procédé selon la revendication 7, **caractérisé en ce que** l'étape A) est réalisée en premier lieu, et est suivie de l'étape B) et ensuite de l'étape C).

9. Procédé selon la revendication 7, **caractérisé en ce qu'**après l'étape A), l'étape C) est exécutée en premier lieu et **en ce que** pour exécuter l'étape B), le mélange (6) est introduit dans l'espace intermédiaire (5) entre la paroi intérieure (4) et la paroi extérieure (2) du récipient que l'on obtient après avoir réalisé l'étape C).
